# EUROPÄISCHE PATENTSCHRIFT

(11) **EP 1 518 412 B1**
(45) Veröffentlichungstag und Bekanntmachung des Hinweises auf die Patenterteilung: **19.03.2014**
(21) Anmeldenummer: 03762441.8
(22) Anmeldetag: 02.07.2003
(51) Int. Cl.: H04N 7/24

(54) **Verfahren zur Ver- und Entschlüsselung von nach dem Verfahren der priorisierten Pixelübertragung betragenen oder gespeicherten digitalen Daten**
Method for coding and decoding digital data stored or transmitted according to the pixels method for transmitting prioritised pixels
Procédé pour coder et décoder des données numériques mémorisées ou transmises selon le procédé de transmission de pixels priorisés

(30) Priorität: 03.07.2002 DE 10229976
(43) Veröffentlichungstag der Anmeldung: 30.03.2005
(73) Patentinhaber: Deutsche Telekom AG, 53113 Bonn (DE)
(72) Erfinder: MOSSAKOWSKI, Gerd, 59227 Ahlen (DE)
(74) Vertreter: Riebling, Peter
(86) Internationale Anmeldenummer: PCT/DE2003/002205
(87) Internationale Veröffentlichungsnummer: WO 2004/006582

(56) Entgegenhaltungen:
- WO-A-02/078352
- CHENG H ET AL: "PARTIAL ENCRYPTION OF COMPRESSED IMAGES AND VIDEOS" IEEE TRANSACTIONS ON SIGNAL PROCESSING, IEEE, INC. NEW YORK, US, Bd. 48, Nr. 8, August 2000 (2000-08), Seiten 2439-2451, XP000958459 ISSN: 1053-587X
- TEIXEIRA L M, SARMENTO L A: "Secure Transmission of MPEG Video Sources" ISPACS'98-6TH INTERNATIONAL WORKSHOP ON INTELLIGENT SIGNAL PROCESSING AND COMMUNICATION SYSTEMS, [Online] 6. November 1998 (1998-11-06), Seiten 1-5, XP002265317 Melbourne, Australia Gefunden im Internet: <URL:http://citeseer.nj.nec.com/cs> [gefunden am 2003-12-13]
- YEN J-C ET AL: "Efficient hierarchical chaotic image encryption algorithm and its VLSI realisation" IEE PROCEEDINGS: VISION, IMAGE AND SIGNAL PROCESSING, INSTITUTION OF ELECTRICAL ENGINEERS, GB, Bd. 147, Nr. 2, 20. April 2000 (2000-04-20), Seiten 167-175, XP006014564 ISSN: 1350-245X

## Beschreibung

Die Erfindung betrifft ein Verfahren zur Ver- und Entschlüsselung von nach dem Verfahren der priorisierten Pixelübertragung übertragenen oder gespeicherten digitalen Daten, nach dem Oberbegriff des Patentanspruchs 1.

Die Erstellung von Informationsinhalten z.B. Bilder, Videos, Audiodaten und Dokumenten ist sehr aufwendig. Bei der Übertragung und Speicherung solcher Informationsinhalte ist es in vielen Anwendungsfällen sinnvoll und notwendig, den Informationsinhalt zu verschlüsseln, um diesen vor unbefugtem Zugriff zu schützen. Hierzu gibt es eine Reihe von Verschlüsselungsverfahren und Applikationen, die diese Aufgabe erfüllen.

Dabei kann eine Verschlüsselung des Informationsinhalts auf verschiedenen Ebenen erfolgen.
- Direkt in einer Anwendung, z.B. durch Kennwortschutz bei Personal Computern oder für einen Programmzugriff
- Unabhängig von einer Anwendung, z.B. mittels des bekannten PGP Verschlüsselungsverfahrens bei E-Mail Anwendungen
- Bei der Übertragung der Informationen, z.B. Informationsübertragung über das Internet mittels IPSec (Internet Protocol Security)

Den bisher bekannten Verschlüsselungsverfahren fehlt es an der Möglichkeit, den Informationsinhalt flexibel und skalierbar zu verschlüsseln. Das heißt, es bestehen keine flexiblen Einstellmöglichkeiten, um zum Beispiel in Abhängigkeit vom Informationsinhalt und der spezifischen Anwendung eine angepasste Verschlüsselung durchführen zu können. So etwas kann jedoch sinnvoll sein wenn man z.B. Video auf Abruf (video on demand) anbieten will, wobei für unterschiedliche Videoqualitäten, z.B. in Abhängigkeit von der Bildauflösung, unterschiedliche Gebühren berechnet werden sollen.

Das Dokument "PARTIAL ENCRYPTION OF COMPRESSED IMAGES AND VIDEOS", CHENG H ET AL, IEEE TRANSACTIONS ON SIGNAL PROCESSING, IEEE, INC. NEW YORK, US, Bd. 48, Nr. 8, August 2000 (2000-08), Seiten 2439-2451, XP000958459ISSN: 1053-587X, beschreibt ein Verfahren zur getrennten und skalierbaren Ver- und Entschlüsselung von verschiedenen Arten von Werten eines kodierten Videosignals.

Die Aufgabe der Erfindung besteht darin, ein Verfahren zur Ver- und Entschlüsselung von nach dem Verfahren der priorisierten Pixelübertragung übertragenen oder gespeicherten digitalen Daten anzugeben, das es ermöglicht, den Informationsinhalt flexibel und skalierbar zu verschlüsseln.

Diese Aufgabe wird erfindungsgemäß durch die Merkmale des Patentanspruchs 1 gelöst.

Als Grundlage für das erfindungsgemäße Verfahren gelten die Verfahren zur Komprimierung und Dekomprimierung von Bild- oder Videodaten mittels priorisierter Pixelübertragung, die in den deutschen Patentanmeldungen DE 101 13 880.6 (entspricht PCT/DE02/00987) und DE 101 52 612.1 (entspricht PCT/DE02/00995) beschrieben sind. Bei diesen Verfahren werden z.B. digitale Bild- oder Videodaten bearbeitet, die aus einem Array einzelner Bildpunkte (Pixel) bestehen, wobei jedes Pixel einen sich zeitlich verändernden Pixelwert aufweist, der Farb- oder Helligkeitsinformation des Pixels beschreibt. Erfindungsgemäß wird jedem Pixel bzw. jeder Pixelgruppe eine Priorität zugeordnet und die Pixel entsprechend ihrer Priorisierung in einem Prioritätenarray abgelegt. Dieses Array enthält zu jedem Zeitpunkt, die nach der Priorisierung sortierten Pixelwerte. Entsprechend der Priorisierung werden diese Pixel, und die für die Berechnung der Priorisierung benutzten Pixelwerte, übertragen bzw. abgespeichert. Ein Pixel bekommt eine hohe Priorität, wenn die Unterschiede zu seinen benachbarten Pixel sehr groß sind. Zur Rekonstruktion werden die jeweils aktuellen Pixelwerte auf dem Display dargestellt. Die noch nicht übertragenden Pixel werden aus den schon übertragenden Pixel berechnet.

Erfindungsgemäß erfolgt die Übertragung bzw. das Speichern der priorisierten Pixelgruppen in Form von Datenpaketen, wobei die Datenpakete nicht nur Bilddaten in Form von Bildpunkten (Pixel) enthalten können, sondern jegliche Art von digitalen Daten die in einem Array speicherbar sind. Dabei besteht ein Datenpaket aus einem Datenwert, der die Position der Pixelgruppe im Array beschreibt und aus den Werten der einzelnen Pixel der Pixelgruppen. Durch Verschlüsselung des Positionswertes der Pixelgruppen und/oder der Pixelwerte der Pixelgruppen ist es möglich, den Dateninhalt gegen unbefugten Zugriff zu schützen. In Abhängigkeit von den verwendeten Schlüsseln und davon, welche Teile des Informationsinhalts verschlüsselt werden, z.B. Positionswerte und/oder Pixelgruppenwerte, können die unterschiedlichsten Bedürfnisse bei der Verschlüsselung berücksichtigt werden. Die Datenpakete werden ihrer Wichtigkeit nach in abgehender Reihenfolge übertragen und/oder gespeichert. Dadurch ist, zumindest bei statischen, sich zeitliche nicht verändernden n-dimensionalen Arrays erfindungsgemäß auch eine Ver- und Entschlüsselung der Pixelgruppen anhand ihrer Wichtigkeit möglich.

Die Vorteile der Erfindung gegenüber dem aktuellen Stand der Technik bestehen in der skalierbaren Handhabung des Verschlüsselungsverfahrens. Im Gegensatz zu herkömmlichen Verfahren bietet die getrennte Verschlüsselung der Positionswerte und /oder Pixelgruppenwerte für unterschiedliche Anforderung den Vorteil, dass in den entsprechenden Anwendungen und Geräten nur dieses Verfahren implementiert werden muss. Ist dieses Verfahren einmal implementiert, können die unterschiedlichsten Anforderungen ein gemeinsames Verfahren nutzen. Dieses reduziert die Anzahl der lmplementierungen, was unter anderem Speicherplatz spart, der insbesondere bei mobilen Endgeräten nur begrenzt zur Verfügung steht. Die Reduzierung der Anzahl der lmplementierungen ergibt sich aus der Möglichkeit, Audio, Bild und Videodaten mit dem gleichen Verfahren zu verschlüsseln.

Vorteilhafte Ausgestaltungen und Weiterbildungen der Erfindung sind in den Unteransprüchen angegeben.

Kurzbeschreibung der Zeichnungen:

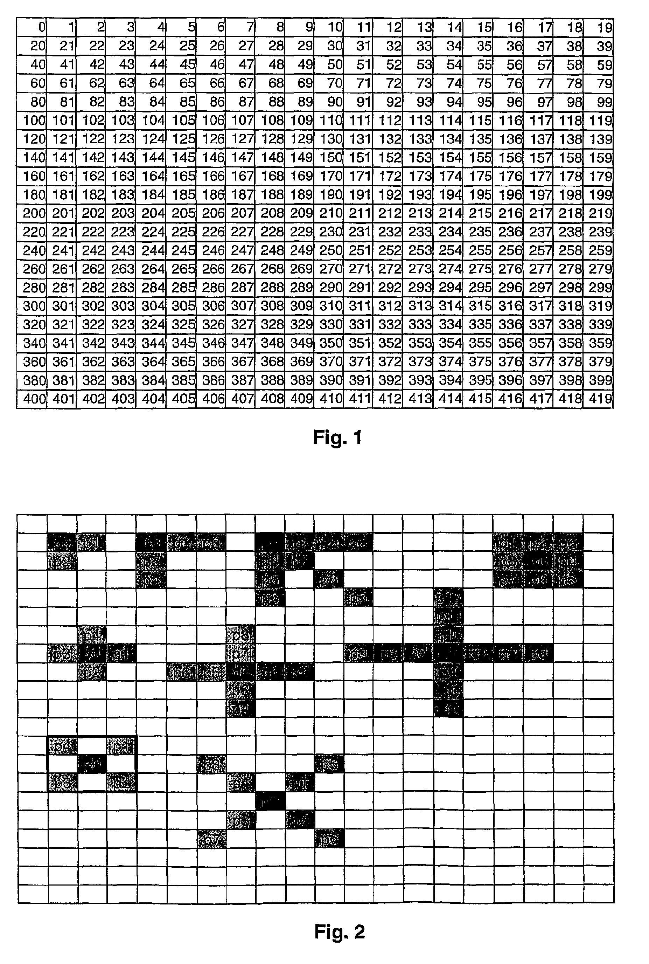

- Figur 1:: Darstellung eines Bildarrays aus 20 x 21 Pixeln;
- Figur 2:: Darstellung verschiedener Formen von Pixelgruppen;

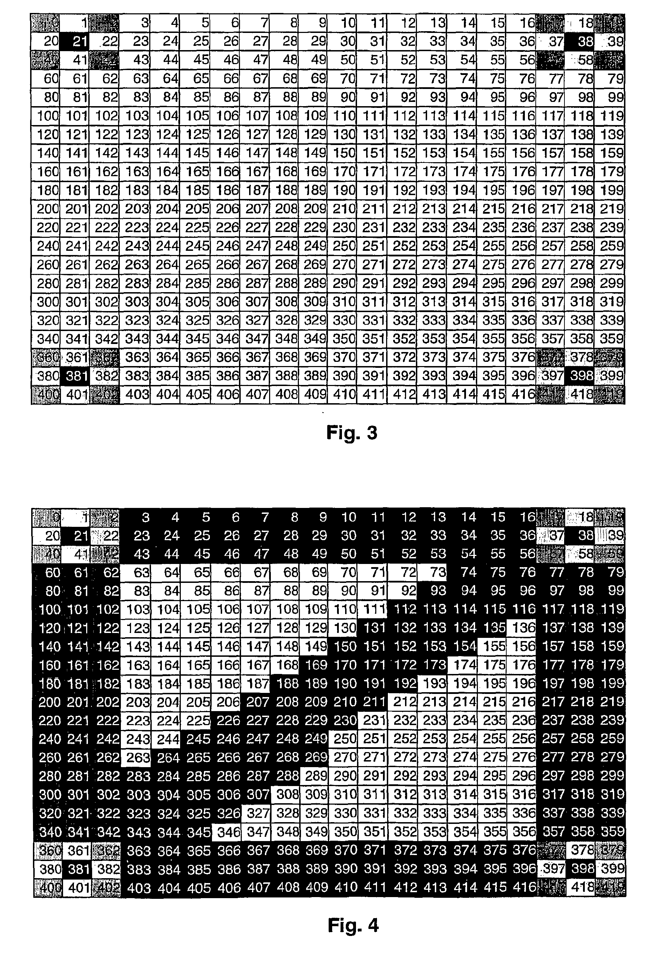

- Figur 3:: neu generiertes Bildarray mit eingefügten Pixelgruppen in der Bildecke;
- Figur 4:: ausfüllen der Flächen zwischen den bereits eingefügten Pixelgruppen;

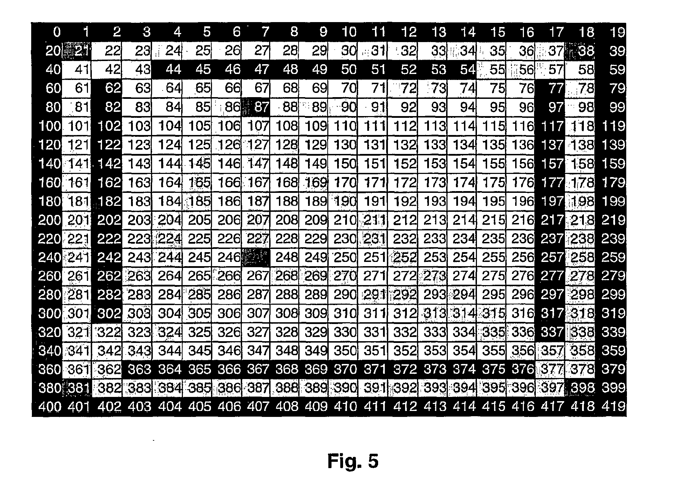

- Figur 5:: einfügen weitere Pixelgruppen und Ausfüllen der dazwischenliegenden Flächen.

In folgenden werden einige Ausführungsbeispiele der Erfindung erläutert.

Es wird davon ausgegangen, dass der Informationsinhalt als 2-dimensionale Bilddatei (Bildarray) vorliegt. Jeder Bildpunkt (Pixel) des Bildarrays wird z.B. durch einen 32 Bit Wert (Pixelwert) repräsentiert. Die 32 Bit sind z.B. in 4 Werte (Transparent, Rot, Grün, Blau) mit jeweils 8 Bit aufgeteilt. Die Bildpunkte des Bildarrays werden durchgezählt, wobei die Position jedes Pixels durch eine ganze Zahl festgelegt ist. Es werden Pixelgruppen gebildet, die aus einem Bezugspixel, das die Position der Pixelgruppe innerhalb des Arrays angibt, und weiteren, das Bezugspixel umgebenden Pixeln bestehen. Jeder Pixelgruppe wird je nach deren "Bildwichtigkeit" eine Priorität zugeordnet, wobei die Pixelgruppen mit der höchsten Priorität zuerst gespeichert bzw. übertragen werden.

Die Pixelgruppen können nun erfindungsgemäß in verschiedenen Verschlüsselungsstufen übertragen bzw. abgespeichert werden.

Ohne Verschlüsselung:
Es besteht ein freier Zugriff auf den gesamten Informationsinhalt, d.h. die Pixelgruppen werden unverschlüsselt übertragen.

Verwendung eines einfachen Schlüssels:
Es wird ein einziger Schlüssel zum ver- und entschlüsseln verwendet, d.h. ein symmetrisches Verschlüsselungsverfahren angewandt. Hierbei können z.B. die Positionswerte der Bezugspixel einer Pixelgruppe verschlüsselt werden, so dass ohne den passenden Schlüssel eine lagerichtige Positionierung der Pixelgruppe im Bildarray nicht mehr möglich ist. Der Schlüssel kann über einen zweiten Übertragungsweg übermittelt werden, z.B. per E-Mail oder Postweg. Es wird keine weitere Infrastruktur benötigt. Ein symmetrisches Verschlüsselungsverfahren ist schneller als ein asymmetrisches Verfahren, beispielsweise PGP.

Verwendung eines asymmetrischen Verschlüsselungsverfahrens:
Es wird jeweils ein privater und ein öffentlicher Schlüssel zum ver- und entschlüsseln des Informationsinhalts verwendet. Die Verschlüsselung ist im Vergleich zum symmetrischen Verfahren aufwendigen und nur auf eine Punkt-zu-Punkt Beziehung beschränkt. Es ist jedoch kein zweiter Übertragungsweg zur Übertragung des Schlüssels notwendig.

Verwendung eines mehrfachen Schlüssels:
Bei einem mehrfachen Schlüssel wird der Schlüssel aus einer Kombination von einzelnen Schlüsseln zusammengestellt. Die Schlüssel können Abhängigkeiten zum Informationsinhalt, zur Zeit, zur Urheberquelle, zum Übertragungsmedium oder zu anderen Merkmalen aufweisen.

Damit lassen sich die Wiedergabemöglichkeiten des Informationsinhalts bei Bedarf beliebig einschränken, und der Informationsinhalt kann so situationsgerecht dargestellt werden. Hierzu einige Beispiele:
- Zeitliche Komponente im Schlüssel: Der Informationsinhalt lässt sich nur ab/bis zu einen bestimmten Zeitpunkt entschlüsseln
- Schlüssel abhängig vom Übertragungsmedium: Der Informationsinhalt lässt sich nur entschlüsseln, wenn das Übertragungsmedium eine bestimmte Identifikation besitzt
- Schlüssel abhängig von der Urheberquelle: Der Informationsinhalt lässt sich nur auf dem Gerät entschlüsseln, auf dem er aufgenommen wurde, z.B. als Missbrauchsschutz bei der Erstellung von Sicherheitskopien

Verwendung von kaskadierten Schlüsseln:
Kaskadierte Schlüssel können benutzt werden, um eine Teilverschlüsselung des Informationsinhalts durchzuführen. Dieses kann zum Beispiel angebracht sein, um im gleichen Datenstrom, die normale Qualität in verschlüsselter Form, und eine schlechte Qualität, z.B. für eine Bildvorschau, in unverschlüsselter Form zu übertragen, ohne dass dabei Redundanz entsteht. Dabei kann zum Beispiel die Auflösung eines Bildes heruntergesetzt werden. Unter "Auflösung" ist in diesem Fall nicht die "Bildhöhe x Bildbreite" gemeint, da diese bei Anwendung des Verfahrens unverändert bleibt. Vielmehr ist mit heruntergesetzter Auflösung eine Abweichung zum Originalbild gemeint, die bei der Rekonstruktion durch noch nicht übertragene und/oder entschlüsselte Pixelgruppen entstehen können. Das Verfahren der kaskadierten Schlüssel arbeitet nach dem Prinzip der Zwiebelschalen. Bei Anwendung des Verfahrens der priorisierten Pixelübertragung kann z.B. eine Reduzierung der Pixelgruppengröße zur Bildung einer kaskadierten Verschlüsselung dienen. Eine Pixelgruppe besteht aus einem (Referenz)Pixel, der durch seinen Positionswert eindeutig bestimmt wird, und einer Anzahl weiterer Pixel. Besteht eine Pixelgruppe z.B. aus insgesamt 9 Pixel, so können zum Beispiel 5 Pixel unverschlüsselt und 4 Pixel verschlüsselt übertragen werden. Die äußere Schale, welche die 5 unverschlüsselten Pixel umfasst, enthält keine Verschlüsselung und würde es zum Beispiel erlauben, ohne Schlüssel ein Video in Briefmarkengröße anzusehen. In der nächsten Schale werden ein oder mehrere der verschlüsselten Pixel übertragen. Für jede weitere Schale wird ein weiterer Schlüssel verwendet. Die Art der Schalen werden vor der Übertragung zwischen Sender und Empfänger vereinbart. Auf diese Art und Weise kann derjenige der alle Schlüssel besitzt und alle Schalen entschlüsseln kann, das Video in der besten Qualität ansehen.

Um Störungen zu verringern, die z.B. durch Abhängigkeiten zwischen den Daten der einzelnen Schalten entstehen können, kann bei dieser Art der Verschlüsselung zusätzlich zu dem Positionswert und den Werten der Pixelgruppen ein Hash-Wert übertragen werden, der sich aus dem Positionswert und den Werten der Pixelgruppen errechnet. Stimmt der im Empfänger berechnete Hash-Wert nicht mit dem übertragenen Hash-Wert überein, wird diese Pixelgruppe nicht entschlüsselt. Dadurch wird erreicht, dass keine Störungen durch andere Schalen auftreten.

Eine Kombination der unterschiedlichen Schlüssel und Verfahren ist möglich.

Selbstverständlich ist das erfindungsgemäße Verschlüsselungsverfahren nicht nur auf Bild- und Videodaten anwendbar, sondern auf alle Arten von digitalen Daten, die sich in Datenblöcke, ähnlich den Datenblöcken von Bildpunkten, unterteilen lassen.

Die Erfindung wird nachfolgend anhand eines einfachen Beispiels näher erläutert.

In Tabelle 1 ist ein Teil eines Datenstromes dargestellt, der nach dem Verfahren der priorisierenden Pixelübertragung aufbereitet wurde. Der Wert "Pos x" gibt die jeweilige Position der Pixelgruppe an, die Werte "Px_n" die einzelnen Pixelwerte der in der Pixelgruppe enthaltenen Pixel. Jede Pixelgruppe besteht beispielsweise aus 5 Pixeln.

**Tabelle 1:**

| | | | | | | | | | | | | | |
|---|---|---|---|---|---|---|---|---|---|---|---|---|---|
| Pos0 | P0_0 | P0_1 | P0_2 | P0_3 | P0_4 | P0_5 | Pos1 | P1_0 | P1_1 | P1_2 | P1_3 | P1_4 | P1_5 |

Tabelle 2 zeigt die Verschlüsselung nur der Positionswerte. Vorteil: Es braucht nur ein Teil des Datenstroms verschlüsselt werden, was eine deutliche Steigerung der Performance gegenüber einer kompletten Verschlüsselung aller Daten bringt. Eine Rekonstruktion der so verschlüsselten Daten ohne Kenntnis des Schlüssels ist nicht oder nur mit großem Rechenaufwand möglich.

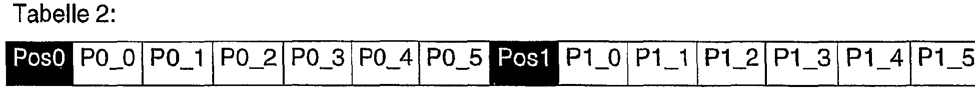

Tabelle 3 zeigt die Verschlüsselung eines Teils der Pixelgruppe. Vorteil: Der gleiche erlaubt aufgrund einer unterschiedlichen Verschlüsselung der Pixelwerte unterschiedliche Qualitäten bei der Rekonstruktion der Bild-, Audio- oder Videodaten. In dem unten angeführten Beispiel kann der Empfänger den Positionswert und die Pixelwerte Px_0 bis Px_2 ohne Schlüssel verwenden. Zur Entschlüsselung der Pixelwerte Px_3 bis Px_5 wird jeweils der passende Schlüssel benötigt. Besitzt der Empfänger den/die Schlüssel für die Pixelwerte Px_3 bis Px_5 nicht, so muss die Applikation diese Pixelwerte aus den frei verfügbaren Werten Px_0 bis Px_2 rekonstruieren. Da dem Empfänger aber eine Vielzahl von Pixelwerten fehlen, ist die Qualität der Rekonstruktion (Auflösung) deutlich reduziert.

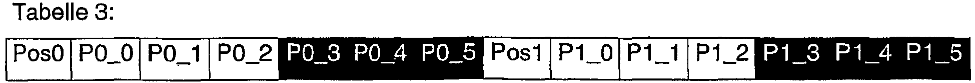

In den angeführten Beispielen werden verschlüsselte und nicht verschlüsselte Daten im gleichen Datenstrom übertragen. Um Übertragungsfehler zu erkennen und um zu erkennen, ob die Entschlüsselung erfolgreich war, kann jeder Teil der Pixelgruppe (Positionswert und Px_n) in der entschlüsselten Form eine CRC-Prüfung enthalten. Tritt ein Übertragungsfehler auf, und die CRC-Prüfung schlägt fehl, so wird der entsprechende Pixelwert nicht zur Rekonstruktion verwendet. Der andere Teil der Pixelgruppe kann weiterhin verwendet werden. Auf diese Art und Weise erhöht sich gleichzeitig die Robustheit des Übertragungsverfahrens gegenüber Übertragungsfehlern. Anstelle einer CRC-Prüfung können auch Hash Funktionen zum Einsatz kommen. Diese bieten einen besseren Sicherungsschutz benötigen aber eine höhere Rechenleistung.

## Patentansprüche

1. Verfahren zur Ver- und Entschlüsselung von zu übertragenden order zu speichernden digitalen Daten, **dadurch gekennzeichnet, dass** der zu ver- oder entschlüsselnde Informationsinhalt aus einzelnen Pixelgruppen besteht, dass jede Pixelgruppe einen Positionswert, mindesten einen Pixelwert sowie einen anhand einer Verfahren der priorisierten Pixelübertragung ihr zugewiesenen Prioritätswert aufweist,
und
dass mindestens ein Schlüssel angewendet wird, mit welchem wahlweise der Positionswert und/oder der Pixelwert/die Pixelwerte einer Pixelgruppe verschlüsselt oder entschlüsselt werden.

2. Verfahren nach Anspruch 1, **dadurch gekennzeichnet, dass** der Schlüssel wahlweise mit der Art des zu verschlüsselnden Informationsinhalts und/oder mit der Urheberquelle, und/oder mit dem verwendeten Übertagungsmedium verknüpft ist oder eine zeitliche Abhängigkeit besitzt.

3. Verfahren nach einem der Ansprüche 1 oder 2, **dadurch gekennzeichnet, dass** jeder Pixelwert oder ein oder mehrere ausgewählte Pixelwerte mit je einem separaten Schlüssel verschlüsselt oder entschlüsselt werden.

4. Verfahren nach einem der Ansprüche 1 bis 3, **dadurch gekennzeichnet, dass** ein symmetrisches Verschlüsselungsverfahren durchgeführt wird.

5. Verfahren nach einem der Ansprüche 1 bis 3, **dadurch gekennzeichnet, dass** ein asymmetrisches Verschlüsselungsverfahren durchgeführt wird.

6. Verfahren nach einem der Ansprüche 1 bis 5, **dadurch gekennzeichnet, dass** die Pixelgruppen aus digitalisierten Abtastwerten eines Audiosignals gebildet werden.

7. Verfahren nach einem der Ansprüche 1 bis 6, **dadurch gekennzeichnet, dass** die Dateien Bilddaten, Videodaten oder Audiodaten enthalten.

8. Verfahren nach einem der Ansprüche 1 bis 7, **dadurch gekennzeichnet, dass** die Farbtiefe der Pixelwerte in Abstufungen mit einem separaten Schlüssel verschlüsselt oder entschlüsselt wird.

## Claims

1. Method for the encryption and decryption of digital data to be transmitted or stored, **characterised in that** the information content to be encrypted or decrypted consists of individual groups of pixels, **in that** each group of pixels has a position value, at least one pixel value and a priority value allocated to it by a method of prioritised pixel transmission, and **in that** at least one key is used, with which optionally the position value and/or the pixel value/values of a group of pixels are encrypted or decrypted.

2. Method according to claim 1, **characterised in that** the key is optionally linked to the type of information content to be encrypted and/or to the creator source, and/or to the transmission medium used, or is time-dependent.

3. Method according to one of claims 1 or 2, **characterised in that** each pixel value or one or more selected pixel values are encrypted or decrypted with a separate key each.

4. Method according to one of claims 1 to 3, **characterised in that** a symmetrical encryption method is carried out.

5. Method according to one of claims 1 to 3, **characterised in that** an asymmetrical encryption method is carried out.

6. Method according to one of claims 1 to 5, **characterised in that** the groups of pixels are formed from digitalised scanning values of an audio signal.

7. Method according to one of claims 1 to 6, **characterised in that** the files contain image data, video data or audio data.

8. Method according to one of claims 1 to 7, **characterised in that** the colour depth of the pixel values is encrypted or decrypted in graduations with a separate key.

## Revendications

1. Procédé pour coder et décoder des données numériques à transmettre ou à mémoriser, **caractérisé en ce que** le contenu d'information à coder ou à décoder se compose de groupes individuels de pixels, **en ce que** chaque groupe de pixels présente une valeur de position, au moins une valeur de pixel et une valeur de priorité qui lui est affectée à l'aide d'un procédé de transmission de pixel priorisée, et **en ce qu'**au moins une clé est utilisée, à l'aide de laquelle la valeur de position et/ou la valeur de pixel/les valeurs de pixel d'un groupe de pixels sont codées ou décodées sélectivement.

2. Procédé selon la revendication 2, **caractérisé en ce que** la clé est liée sélectivement au type de contenu d'information à coder et/ou à la source d'auteur, et/ou au support de transmission utilisé, ou présente une dépendance dans le temps.

3. Procédé selon l'une des revendications 1 ou 2, **caractérisé en ce que** chaque valeur de pixel ou une ou plusieurs valeurs de pixel sélectionnées sont codées ou décodées chacune avec une clé séparée.

4. Procédé selon l'une des revendications 1 à 3, **caractérisé en ce qu'**un procédé de codage symétrique est réalisé.

5. Procédé selon l'une des revendications 1 à 3, **caractérisé en ce qu'**un procédé de codage asymétrique est réalisé.

6. Procédé selon l'une des revendications 1 à 5, **caractérisé en ce que** les groupes de pixels sont formés à partir de valeurs de lecture numérisées d'un signal audio.

7. Procédé selon l'une des revendications 1 à 6, **caractérisé en ce que** les fichiers contiennent des données d'image, des données vidéo ou des données audio.

8. Procédé selon l'une des revendications 1 à 7, **caractérisé en ce que** l'intensité de couleur des valeurs de pixel est codée ou décodée dans des gradations avec une clé séparée.
